# EUROPEAN PATENT SPECIFICATION

(11) **EP 3 385 209 B1**
(45) Date of publication and mention of the grant of the patent: **22.01.2020**
(21) Application number: 18165780.0
(22) Date of filing: 04.04.2018
(51) Int. Cl.: B66B 11/04, F16C 35/04, F16C 35/077

(54) **HOIST MACHINE AND ELEVATOR**
HEBEMASCHINE UND AUFZUG
MACHINE DE LEVAGE ET ASCENSEUR

(30) Priority: 07.04.2017 JP 2017076402
(43) Date of publication of application: 10.10.2018
(73) Proprietor: Hitachi, Ltd., Chiyoda-ku Tokyo 100-8280 (JP)
(72) Inventor: YAMAMOTO, Hirotsugu, Chiyoda-ku, Tokyo 100-8280 (JP); IGARASHI, Akitomo, Chiyoda-ku, Tokyo 100-8280 (JP); OGATA, Naofumi, Chiyoda-ku, Tokyo 100-8280 (JP); NISHINO, Yoshinori, Hitachinaka-shi, Ibaraki 312-8506 (JP)
(74) Representative: Mewburn Ellis LLP

(56) References cited:
- EP-A1- 1 705 148
- EP-A1- 1 886 962
- WO-A1-2011/023559
- DE-A1-102005 047 404

## Description

### [Technical Field]

The present invention relates to a hoist machine and an elevator.

### [Background Art]

Japanese Patent Application Laid-Open No. 2009-40587 (Patent Literature 1) discloses a hoist machine. The Patent Literature 1 explains the hoist machine as follows. "A hoist machine includes a housing constituted by a pair of support walls, and a top board. The support walls face with each other at intervals while standing from a floor board. Each support wall includes a hollow cylindrical boss. The bosses are coaxially arranged in a horizontal direction. A rotary shaft is spanned over the bosses. The rotary shaft is horizontally disposed so as to be orthogonal to a hoistway. One end of the rotary shaft is rotatably supported with one of the bosses via a first roll bearing. The other end of the rotary shaft is rotatably supported with the other boss via a second roll bearing."

DE 10 2005 047404 A1 proposes a lifting transmission including a rotor element on a fixed axis extending from a stator element and an adjustment element.

WO 2011/023559 A1 proposes a bearing arrangement comprising a bearing support, wherein the bearing support comprises at least one receptacle for a bearing.

EP 1 886 962 A1 proposes a traction machine for elevators.

EP 1 705 148 A1 proposes an elevator hoisting machine having a rotary portion rotatably supported by a base member.

### [Summary of the Invention]

### [Technical Problem]

According to the Patent Literature 1, a bearing housing for supporting the end of the rotary shaft of the hoist machine at the sheave device side (the side opposite the casing) is disposed in the support wall. Accordingly, the rotary shaft extends to the end of the support wall at the sheave device side.

In general, the hoist machine is brought and installed in the existing building while having the support section for the rotary shaft kept attached. The dimension of the hoist machine in the axial direction of the rotary shaft upon carry-in and installation corresponds to the length from the outer end of the casing to the outer end of the support section.

It is an object of the present invention to provide a hoist machine and an elevator, ensuring to reduce the axial dimension of the hoist machine by removing at least a part of the support section for a main shaft.

### [Solution to Problem]

According to a first aspect of the invention, there is provided a hoist machine as set out in claim 1.

According to a second aspect of the invention, there is provided an elevator as set out in claim 5.

### [Advantageous Effects of Invention]

The present invention is capable of reducing the axial dimension of the hoist machine by removing at least a part of the support section.

The problem, structure, and effect of the present invention other than those described above will be clarified by explanation of the embodiment as described below.

### [Brief Description of the Drawings]

Fig. 1 is a view schematically illustrating an elevator according to an embodiment of the present invention;
Fig. 2 is a side view of a hoist machine disposed in a machine chamber according to the embodiment of the present invention;
Fig. 3 is a front view of the hoist machine as shown in Fig. 2;
Fig. 4 is a horizontal sectional view of the hoist machine as shown in Fig. 3;
Fig. 5 is a sectional view of the hoist machine taken along line A-O-B of Fig. 3; and
Fig. 6 is a sectional view of the hoist machine taken along line C-C of Fig. 3.

### [Description of Embodiments]

An embodiment of the present invention will be described referring to the drawings.

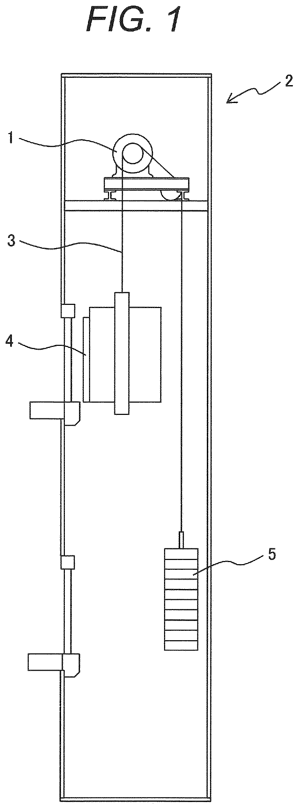

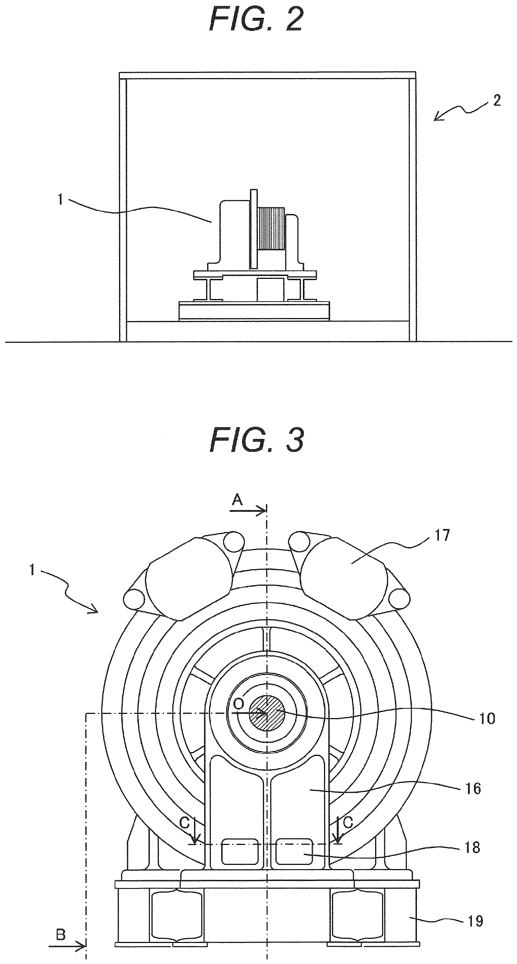

Fig. 1 is a view schematically illustrating an elevator according to an embodiment of the present invention. Fig. 2 is a side view of a hoist machine disposed in a machine chamber.

An elevator 2 using a hoist machine 1 is configured to allow a car 4 and a counter weight 5 which are linked with a main rope 3 to be liftable in a hoistway. The hoist machine 1 is disposed between the car 4 and the counter weight 5 via the main rope 3.

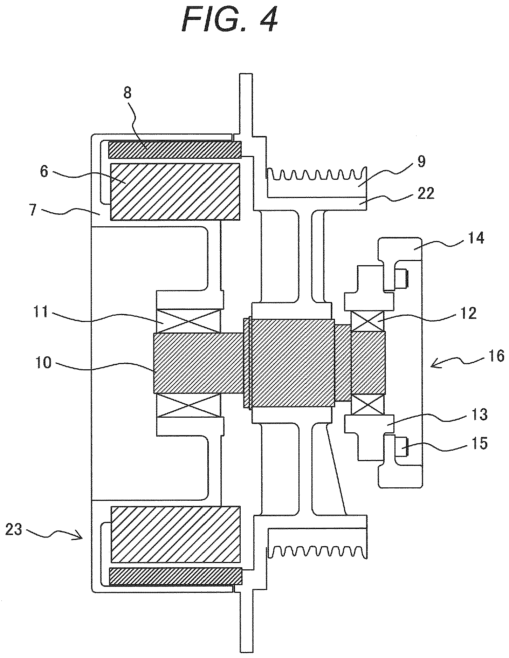

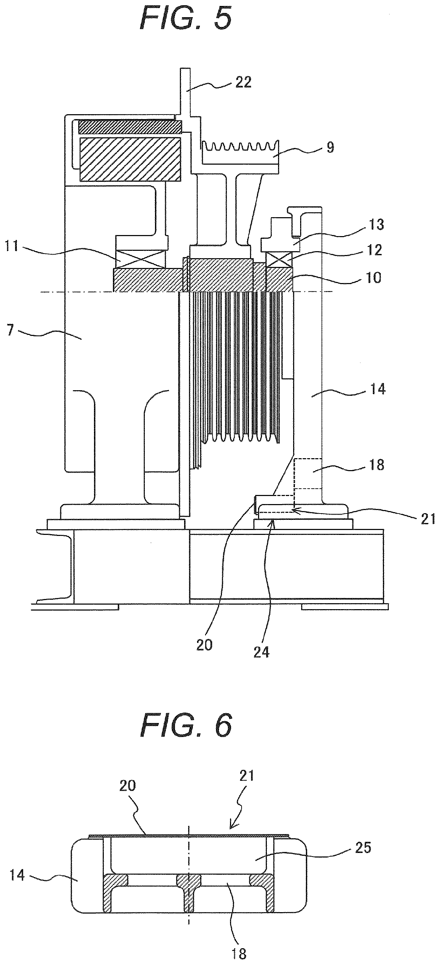

The hoist machine 1 according to the embodiment of the present invention will be described referring to Figs. 3 to 6. Fig. 3 is a front view of the hoist machine as shown in Fig. 2. Fig. 4 is a horizontal sectional view of the hoist machine as shown in Fig. 3. Fig. 5 is a sectional view of the hoist machine taken along line A-O-B of Fig. 3. Fig. 6 is a sectional view of the hoist machine taken along line C-C of Fig. 3.

The hoist machine 1 includes a casing 7 in which a stator 6 constituting a motor 23 is stored, a rotor 8 constituting the motor 23 while being arranged to face the stator 6, a frame 22 to which the rotor 8 is attached, a sheave device 9 attached to the frame 22, and a brake 17 brought into contact with the frame 22 for braking rotating motions of the sheave device 9.

The main rope 3 is wound around the sheave device 9 which rotates together with the rotor 8. The hoist machine 1 placed on a machine base 19 is configured to drive the car 4 for moving up and down via the main rope 3.

The frame 22 rotates together with a main shaft 10 having one end at the casing side in the axial direction attached to the casing 7 via a casing side bearing 11, and the other end at the sheave device side supported with a support section 16.

The support section 16 will be explained. The support section 16 includes a support base side bearing 12, a housing 13, a support base 14, and a bolt 15.

The support base side bearing 12 is attached to the other end of the main shaft 10, and disposed inside the housing 13.

The housing 13 as a part of the support section 16 is disposed closer to the casing than the support base 14 in the axial direction of the main shaft 10.

The housing 13 as a part of the support section 16 is configured to be disposed in the inner space of the sheave device 9. The inner space refers to the space defined by the main shaft 10 and the surface of the frame 22, which faces the main shaft 10.

Referring to the side sectional view of the hoist machine 1, at least a part of the housing 13 is at a position interposed between the main shaft 10 and the frame 22.

Additionally, the housing 13 and the support base 14 are assembled with the bolt 15 so as to allow the casing side bearing 11 and the support base side bearing 12 to bear the suspension load of the car 4, the counter weight 5 and the like, which is applied to the sheave device 9 via the main rope 3. The casing 7 bears the suspension load via the casing side bearing 11.

The support base 14 is fixed (connected) to the housing 13 with the bolt 15. The frictional force is generated between the housing 13 and the support base 14 under the axial force as a result of fastening the bolt 15 for bearing the suspension load.

Upon carry-in and installation of the hoist machine 1 in a disassembled state in the existing building, it is required to pass through the passage and stairs of the building, entrance to the machine chamber, and the like. In general, conditions for carry-in and installation in the existing building, for example, the weight and dimension of the hoist machine are severer than those for carry-in and installation in the new building.

Even if the support section 16 is removed for reducing the weight of the conventionally employed hoist machine upon carry-in and installation, the structure having the support base side bearing 12 located at the same position as the support base 14 cannot shorten the dimension.

Compared with the conventionally employed structure, the hoist machine according to the embodiment of the present invention is configured to have the housing 13 closer to the casing than the support base 14. Further, it is sufficient that the end of the main shaft 10 at sheave device side is located at a position which the support base side bearing 12 is able to support the end of the main shaft 10. It is, therefore, possible to shorten the length of the extended end of the main shaft 10 at sheave device side by the amount corresponding to the distance reduced as a result of the positional difference between the housing 13 and the support base 14. The above-described reduction hardly hinders the support base side bearing 12 from supporting the end of the main shaft 10.

Removal of the support section 16, or the support base 14 as a part of the support section 16 makes it possible to make both the weight and the axial dimension of the hoist machine 1 smaller than the case before removal.

In the case of carry-in and installation of the hoist machine 1 in the disassembled state by removing at least a part of the support section 16, the hoist machine has to be reassembled in the machine chamber of the building. The hoist machine is installed in the existing building in such cases as renewal or failure of the elevator. In either case, it is preferable to make the days for deactivating the elevator fewer. Therefore, the hoist machine has to be configured to be easily reassembled.

Conventionally, as the support base 14 and the housing 13 are integrated as the single component, the bearing housing of the heavily weighed support base 14 has to be directly fitted with the support base side bearing 12 as the precision component, resulting in deteriorated workability.

However, according to the embodiment of the present invention, the housing 13 is separable from the support base 14. They can be assembled and fastened with the bolt 15.

In the case of carry-in and installation of the hoist machine 1 in the disassembled state, having the support base 14 removed while maintaining the support base side bearing 12 and the housing 13 kept attached to the main shaft 10, the operation for fitting the main shaft 10 with the bearing housing part constituted by the support base side bearing 12 and the housing 13 is no longer necessary on the site. This makes it possible to facilitate the assembly work on the site.

The present invention ensures to reduce the axial dimension of the hoist machine expected to be brought and installed in the disassembled state, and to facilitate the assembly work in the building.

At least a part of the housing 13 which partially constitutes the support section 16 is disposed in the inner space of the sheave device 9. This makes it possible to shorten the length of the extended end of the main shaft 10 at the sheave device side compared with the structure having the housing 13 disposed outside the inner space of the sheave device 9.

The hoist machine 1 according to the embodiment of the present invention further includes an oil reservoir 21 on a leg 24 of the support base 14, extending toward the casing. The oil reservoir 21 is constituted by a recess 25 formed in the leg 24, and a lid 20 that covers the end of the recess 25 at the casing side. For example, the lid 20 is fixed to the support base 14 with the bolt.

The support base 14 has an opening 18 located at the level higher than the oil reservoir 21.

The above described structure allows the oil reservoir 21 to catch the oil leaked through the housing 13 closer to the casing than the support base 14. The opening 18 allows the operator to inspect the oil leakage from the outside.

It is difficult to clean the oil reservoir 21 from its side (direction toward the depth of the sectional view of Fig. 5) through which the main rope 3 passes. Meanwhile, the structure according to the embodiment of the present invention has the opening 18 formed in the support base 14 so that the oil reservoir 21 is cleaned from the opening 18.

The present invention is not restricted to the embodiment as described above, and allows various modifications. For example, the structure having the rotatable main shaft 10 has been described as the example. However, it is possible to use the fixed shaft as the main shaft.

It is possible to form the support section 16 by assembling the component formed by integrating the housing 13 and the support base 14, and the support base side bearing attached to the inside of the housing of the integrated component.

In the above-described structure, it is possible to shorten the main shaft 10 supported with the support base side bearing by the amount corresponding to the distance reduced by bringing the support base side bearing closer to the casing in the axial direction of the main shaft 10. Compared with the conventionally employed structure, the reduction hardly hinders the support base side bearing from supporting the main shaft 10. Accordingly, the axial dimension of the hoist machine may be reduced in the state where the support base is removed.

### [List of Reference Sings]

- 1: hoist machine
- 2: elevator
- 3: main rope
- 4: car
- 5: counter weight
- 6: stator
- 7: casing
- 8: rotor
- 9: sheave device
- 10: main shaft
- 11: casing side bearing
- 12: support base side bearing
- 13: housing
- 14: support base
- 15: bolt
- 16: support section
- 17: brake
- 18: opening
- 19: machine base
- 20: lid
- 21: oil reservoir
- 22: frame
- 23: motor
- 24: leg
- 25: recess

## Claims

1. An elevator hoist machine (1) comprising:
a sheave device (9);
a frame (22) to which the sheave device (9) is fixed;
a main shaft (10) for supporting the frame (22);
a casing (7) for supporting one end of the main shaft (10); and
a support section (16) for supporting the other end of the main shaft (10),
wherein the support section (16) includes a bearing (12) attached to the main shaft (10) at a side of the other end, a housing (13) having the bearing (12) disposed in an inner space, and a support base (14) to which the housing (13) is fixed,
**characterized in that**:
the housing (13) is disposed closer to the casing (7) than the support base (14) in an axial direction of the main shaft (10); and
in a side sectional view of the elevator hoist machine, at least a part of the housing (13) is disposed at a position interposed between the main shaft (10) and the frame (22) .

2. The elevator hoist machine (1) according to claim 1, further comprising a bolt (15) for fixing the housing (13) and the support base (14) which are separated from each other.

3. The elevator hoist machine (1) according to claim 1 or claim 2, wherein:
the support base (14) is provided with an oil reservoir (21); and
the oil reservoir (21) is configured with a recess (25) formed in a leg (24) of the support base (14), extending toward the casing (7), and a lid (20) attached to an end of the leg (24).

4. The elevator hoist machine (1) according to claim 3, wherein the support base (14) includes an opening (18) at a level higher than the oil reservoir (21).

5. An elevator (2) comprising:
a car (4) configured to move up and down in a hoistway;
a counter weight (5) configured to move up and down in the hoistway;
a main rope (3) for linking the car (4) and the counter weight (5); and
a hoist machine (1) for moving the car (4) and the counter weight (5) up and down by hoisting the main rope (3), **characterized in that**
the hoist machine according to any one of claims 1 to 4 is employed as the hoist machine (1).

## Patentansprüche

1. Aufzug-Hebevorrichtung (1), die Folgendes umfasst:
eine Triebscheibenvorrichtung (9);
einen Rahmen (22), an dem die Triebscheibenvorrichtung (9) befestigt ist;
eine Hauptwelle (10) zum Lagern des Rahmens (22);
einen Mantel (7) zum Lagern eines Endes der Hauptwelle (10); und
einen Lagerabschnitt (16) zum Lagern des anderen Endes der Hauptwelle (10),
wobei der Lagerabschnitt (16) ein Lager (12), das auf einer Seite des anderen Endes an der Hauptwelle (10) angebracht ist, ein Gehäuse (13), in dem das Lager (12) in einem inneren Hohlraum angeordnet ist, und eine Lagerbasis (14) umfasst, an der das Gehäuse (13) befestigt ist,
**dadurch gekennzeichnet, dass**:
das Gehäuse (13) in einer Achsenrichtung der Hauptwelle (10) näher an dem Mantel (7) angeordnet ist als die Lagerbasis (14); und
zumindest ein Teil des Gehäuses (13) in einer Seitenschnittansicht der Aufzug-Hebevorrichtung an einer Position angeordnet ist, die sich zwischen der Hauptwelle (10) und dem Rahmen (22) befindet.

2. Aufzug-Hebevorrichtung (1) nach Anspruch 1, ferner umfassend einen Bolzen (15) zum Fixieren des Gehäuses (13) und der Lagerbasis (14), die voneinander getrennt sind.

3. Aufzug-Hebevorrichtung (1) nach Anspruch 1 oder Anspruch 2, wobei:
die Lagerbasis (14) mit einem Ölreservoir (21) versehen ist; und
das Ölreservoir (21) mit einer Vertiefung (25) konfiguriert ist, die in einem Schenkel (24) der Lagerbasis (14) ausgebildet ist, die sich zum Mantel (7) hin erstreckt, und ein Deckel (20) an einem Ende des Schenkels (24) angeordnet ist.

4. Aufzug-Hebevorrichtung (1) nach Anspruch 3, wobei die Lagerbasis (14) eine Öffnung (18) auf einem Niveau aufweist, das höher liegt als das Ölreservoir (21).

5. Aufzug (2), der Folgendes umfasst:
eine Kabine (4), die konfiguriert ist, sich in einem Aufzugschacht auf und ab zu bewegen;
ein Gegengewicht (5), das konfiguriert ist, sich in dem Aufzugschacht auf und ab zu bewegen;
ein Hauptseil (3) zum Verbinden der Kabine (4) und des Gegengewichts (5); und
eine Hebevorrichtung (1) zum Auf- und Ab-Bewegen der Kabine (4) und des Gegengewichts (5) durch Aufwinden des Hauptseils (3),
**dadurch gekennzeichnet, dass**:
eine Hebevorrichtung nach einem der Ansprüche 1 bis 4 als Hebevorrichtung (1) verwendet wird.

## Revendications

1. Machine de levage d'ascenseur (1) comprenant :
un dispositif à poulie (9) ;
un cadre (22) auquel le dispositif à poulie (9) est fixé ;
un arbre principal (10) pour supporter le cadre (22) ;
un carter (7) pour supporter une extrémité de l'arbre principal (10) ; et
une section de support (16) pour supporter l'autre extrémité de l'arbre principal (10),
dans lequel la section de support (16) comprend un palier (12) fixé à l'arbre principal (10) au niveau d'un côté de l'autre extrémité, un logement (13) ayant le palier (12) disposé dans un espace intérieur, et une base de support (14) auquel est fixé le logement (13),
**caractérisé en ce que** :
le logement (13) est disposé plus près du carter (7) que de la base de support (14) dans une direction axiale de l'arbre principal (10) ; et
dans une vue en coupe latérale de la machine de levage d'ascenseur, au moins une partie du logement (13) est disposée dans une position interposée entre l'arbre principal (10) et le cadre (22).

2. Machine de levage d'ascenseur (1) selon la revendication 1, comprenant en outre un boulon (15) pour fixer le logement (13) et la base de support (14) qui sont séparés l'un de l'autre.

3. Machine de levage d'ascenseur (1) selon la revendication 1 ou la revendication 2, dans laquelle :
la base de support (14) est munie d'un réservoir d'huile (21) ; et
le réservoir d'huile (21) est configuré avec un évidement (25) formé dans une jambe (24) de la base de support (14), s'étendant vers le carter (7), et un couvercle (20) fixé à une extrémité de la jambe (24).

4. Machine de levage d'ascenseur (1) selon la revendication 3, dans laquelle la base de support (14) comprend une ouverture (18) à un niveau supérieur au réservoir d'huile (21).

5. Ascenseur (2) comprenant :
une cabine (4) configurée pour se déplacer verticalement dans une cage ;
un contrepoids (5) configuré pour se déplacer verticalement dans la cage ;
un câble principal (3) pour relier la cabine (4) et le contrepoids (5) ; et
une machine de levage (1) pour déplacer la cabine (4) et le contrepoids (5) verticalement en hissant le câble principal (3), **caractérisée en ce que**
la machine de levage selon l'une quelconque des revendications 1 à 4 est utilisée comme machine de levage (1).
